# EUROPEAN PATENT APPLICATION

(11) **EP 4 711 938 A1**
(43) Date of publication of application: **18.03.2026**
(21) Application number: 25170344.3
(22) Date of filing: 14.04.2025
(51) Int. Cl.: G06F 12/0811, G06F 12/0831, G06F 12/084

(54) **SHARED MEMORY DEVICE AND MEMORY SYSTEM INCLUDING SHARED MEMORY DEVICE**

(30) Priority: 13.09.2024 KR 20240125668
(71) Applicant: Samsung Electronics Co., Ltd., Suwon-si, Gyeonggi-do 16677 (KR)
(72) Inventor: HA, Seungjun, Suwon-si, Gyeonggi-do 16677 (KR); SO, Jinin, Suwon-si, Gyeonggi-do 16677 (KR); LEE, Seunghak, Suwon-si, Gyeonggi-do 16677 (KR)
(74) Representative: Kuhnen & Wacker Patent- und Rechtsanwaltsbüro PartG mbB

(57) **Abstract**

A shared memory device (100) includes a memory bank (BNK) that stores first raw data corresponding to a first cache line stored in a first processor (11) among processors (11, 12), a snoop filter circuit (110) including a first snoop filter entry (SFE) corresponding to the first cache line and a first entry access count (EAC) corresponding to the first snoop filter entry (SFE), and a migration management circuit (120) that determines a hotness of the first cache line based on the first entry access count (EAC) and issues a migration request for the first raw data to the first processor (11) based on the hotness.

## Description

### BACKGROUND

The present disclosure relates to a semiconductor memory device. More specifically, the present disclosure relates to a shared memory device accessed from a plurality of processors and a memory system including thereof.

In a hierarchical memory system, a dedicated memory may have a higher communication speed than a shared memory. Thus, in some cases, data in the shared memory device may be cached to improve access thereto.

However, when a cache line of the cache is invalidated (or evicted), a read of the invalidated cache line from the shared memory device may cause read latency.

### SUMMARY

It is an aspect to provide a shared memory device that triggers a migration of a raw data and a memory system including the shared memory device.

According to an aspect of one or more embodiments, there is provided a shared memory device comprising a memory bank configured to store first raw data corresponding to a first cache line stored in a first processor among a plurality of processors; a snoop filter circuit including a first snoop filter entry corresponding to the first cache line and a first entry access count corresponding to the first snoop filter entry; and a migration management circuit configured to determine a hotness of the first cache line based on the first entry access count and to issue a migration request for the first raw data to the first processor based on the hotness.

According to another aspect of one or more embodiments, there is provided a memory system comprising a first processor including a cache memory that stores a plurality of cache lines; a dedicated memory device for the first processor; and a shared memory device configured to store a raw data for a first cache line of the plurality of cache lines, and to determine whether the first cache line is a hot cache line. The first processor is configured to migrate the raw data from the shared memory device to the dedicated memory device when the first cache line is determined to be the hot cache line.

According to yet another aspect of one or more embodiments, there is provided a shared memory device configured to communicate with a first processor which stores a first cache line, the shared memory device comprising a snoop filter circuit including a snoop filter entry for the first cache line, and an entry access count for the snoop filter entry; a back snoop circuit configured to update the entry access count by performing a back snooping for the first cache line; and a migration management circuit configured to determine a hotness of the first cache line based on the entry access count.

### BRIEF DESCRIPTION OF THE DRAWINGS

FIG. 1 is a block diagram showing a memory system according to an embodiment.
FIG. 2 is a diagram showing a configuration of a snoop filter circuit of the memory system of FIG. 1 in more detail, according to an embodiment.
FIG. 3 is a diagram showing a case in which a cache line stored in a first cache memory is invalidated by a shared memory device of the memory system of FIG. 1, according to an embodiment.
FIG. 4 is a diagram showing in more detail how a migration is performed in the memory system of FIG. 1, according to an embodiment.
FIG. 5 is a diagram showing how an entry access count of the snoop filter circuit of FIG. 2 is increased, according to an embodiment.
FIG. 6 and FIG. 7 are drawings showing an operation of a back snoop circuit of the memory system of FIG. 1, according to an embodiment.
FIG. 8 is a flowchart showing an operation of a shared memory device performing a back snoop operation according to an embodiment.
FIG. 9 is a bore showing an effect of a back snoop operation on a test cache line according to an embodiment.
FIG. 10 is a flowchart showing how migration is performed according to an embodiment.
FIG. 11 is a diagram showing in more detail how a migration is performed in the memory system of FIG. 1, according to an embodiment.
FIG. 12 is a flowchart showing how a migration is performed, according to an embodiment.
FIG. 13 is a block diagram showing a memory system according to an embodiment.
FIG. 14 is a block diagram showing a memory system according to an embodiment.
FIG. 15 is a flowchart showing an operation of a first processor of the memory system of FIG. 14, according to an embodiment.

### DETAILED DESCRIPTION

Hereinafter, various embodiments will be described clearly and in detail to the extent that a person of an ordinary skill in the technical field of present disclosure can easily practice present disclosure. Details such as detailed configurations and structures are provided merely to facilitate an overall understanding of the various embodiments. Moreover, descriptions of well-known functions and structures may be omitted for clarity and conciseness. Components in the following drawings or detailed description may be connected to other elements other than the constituent elements shown in the drawing or described in the detailed description. The terms used in this specification are terms defined in consideration of the functions of present disclosure, and are not limited to specific functions. The definition of terms may be determined based on the details described in the detailed description.

Constituent elements described with reference to terms such as a driver or a block used in the detailed description may be implemented in the form of software, hardware, or a combination thereof. Illustratively, software may be machine code, firmware, embedded code, and/or application software. For example, the hardware may include an electric circuit, an electronic circuit, a processor, a computer, integrated circuit cores, a pressure sensor, an inertial sensor, a Micro Electro Mechanical System (MEMS), a passive element, or a combination thereof.

A hierarchical memory system may include a plurality of processors, a dedicated memory device for each of the plurality of processors, and a shared memory device for the plurality of processors. A communication speed between a processor and a dedicated memory device corresponding thereto may be faster than a communication speed between the processor and the shared memory device.

The plurality of processors may each cache a raw data which is stored in the shared memory device. The shared memory device may ensure a cache coherence for each of the plurality of processors. For example, the shared memory device may manage a snoop filter for each cache line of the plurality of processors.

However, when the cache line, which is originally provided from the shared memory device, is invalidated or evicted, as the corresponding processor reads a valid data corresponding to the invalidated cache line from the shared memory device, an excessively long read latency may occur. It is an aspect to provide a shared memory device that triggers a migration of a raw data in order to address this excessively long latency, and a memory system including the shared memory device.

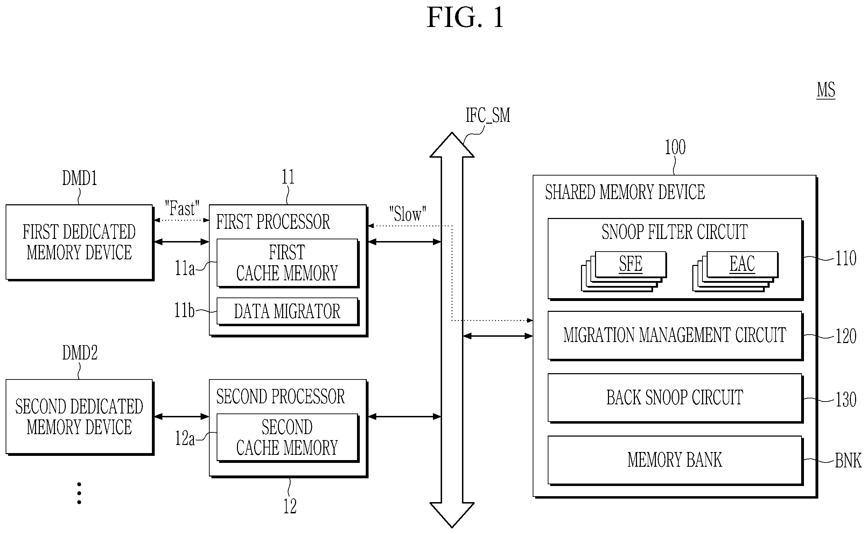

FIG. 1 is a block diagram showing a memory system according to an embodiment. Referring to FIG. 1, a memory system MS may include a first processor 11, a second processor 12, a first dedicated memory device DMD1, a second dedicated memory device DMD2, and a shared memory device 100.

Each of the first processor 11 and the second processor 12 may be one of various processors, such as a central processing unit (CPU), a graphics processing unit (GPU), a neural processing unit (NPU), and/or a data processing unit (DPU). Each of the first processor 11 and the second processor 12 may be implemented as one processing core or as a plurality of processing cores.

Each of the first dedicated memory device DMD1, the second dedicated memory device DMD2, and the shared memory device 100 may be a dynamic random access memory (DRAM) device.

The first dedicated memory device DMD1 may be used as a dedicated memory device for the first processor 11. For example, in some embodiments, the first processor 11 may communicate directly with the first dedicated memory device DMD1 based on a double data rate (DDR) interface. Similarly, a second dedicated memory device DMD2 may be used as a dedicated memory device for the second processor 12. For example, in some embodiments, the second processor 12 may communicate directly with the second dedicated memory device DMD2 based on a DDR interface.

In an embodiment, the first dedicated memory device DMD1 may be referred to as a host memory device for the first processor 11, and the second dedicated memory device DMD2 may be referred to as a host memory device for the second processor 12. However, embodiments are not limited to these terms.

The first processor 11 and the second processor 12 may share the shared memory device 100. For example, the first processor 11 and the second processor 12 may communicate with the shared memory device 100 through the shared memory interface circuit IFC_SM.

The shared memory device 100 may include a memory bank BNK, a snoop filter circuit 110, a migration management circuit 120, and a back snoop circuit 130. The shared memory device 100 may store data in the memory bank BNK in response to requests from the first processor 11 and the second processor 12, and may output data stored in the memory bank BNK in response to requests from the first processor 11 and the second processor 12.

In an embodiment, the shared memory interface circuit IFC_SM may be implemented as a Compute Express Link interface (CXL) switch implementing a CXL interface. In this case, the shared memory device 100 may also be referred to as a CXL memory device, and the first processor 11 and the second processor 12 may each be referred to as a CXL host device. However, embodiments are not limited to these terms.

The first processor 11 may include a first cache memory 11a, and the second processor 12 may include a second cache memory 12a. Each of the first processor 11 and the second processor 12 may cache raw data stored in the shared memory device 100 or stored in a corresponding dedicated memory device DMD. For example, the first processor 11 may cache the raw data stored in the memory bank BNK or stored in the first dedicated memory device DMD1 into the first cache memory 11a. Similarly, the second processor 12 may cache the raw data stored in the memory bank BNK or stored in the second dedicated memory device DMD2 into the second cache memory 12a.

The data stored in the cache memory may be input/output in a cache line unit. Each of the first processor 11 and the second processor 12 may perform various operations, such as read operations, modify operations, and invalidate operations, for the cache lines stored in the corresponding cache memories. For example, after one raw data stored in the memory bank BNK is cached in both the first processor 11 and the second processor 12, the cache lines corresponding to the raw data may be individually modified by each processor.

The shared memory device 100 may ensure a cache coherence for the cache lines stored on the plurality of processors. For example, the shared memory device 100 may include the snoop filter circuit 110. The snoop filter circuit 110 may include a plurality of snoop filter entries SFE. The plurality of snoop filter entries SFE may respectively correspond to the different raw data cached in one or more processors. The plurality of snoop filter entries SFE may each represent information about the corresponding raw data. For example, each of the plurality of snoop filter entries SFE may represent a device physical address (DPA) within the shared memory device 100 of the corresponding raw data, an identifier of the processor caching the raw data, and/or a state of the cache line corresponding to the raw data.

Therefore, even if the one raw data is cached in the plurality of processors, each of the plurality of processors may be able to identify the status of the raw data based on the information indicated by the snoop filter entry SFE. For example, the plurality of processors may each identify a processor which stores the cache line (i.e., a valid data) representing a most recent version of a specific raw data, based on the information presented by the snoop filter entry SFE. In this case, the cache coherence for the plurality of processors may be maintained even if the single raw data is cached in a plurality of processors.

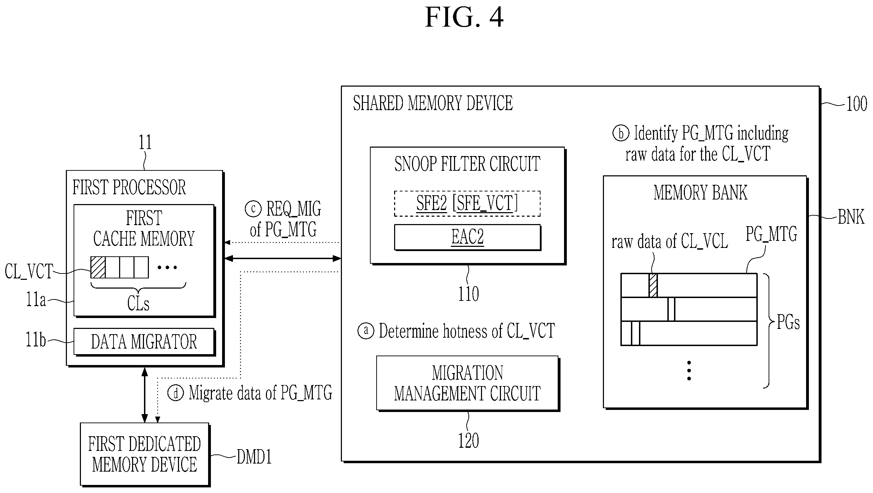

In an embodiment, the plurality of snoop filter entries SFE may each represent the information about the raw data based on the modified, exclusive, shared and valid (MESI) protocol. For example, the plurality of snoop filter entries SFE may each indicate the state of the cache line corresponding to the raw data as one of modified (M), exclusive (E), shared (S), or invalid (I). A more detailed configuration of each of the plurality of snoop filter entries SFE is described in below with reference to FIG. 4.

The cache line stored in each of the plurality of processors may be invalidated for various reasons. For example, the first cache line stored in the first cache memory 11a may be invalidated as the second cache line which is stored in the second cache memory 12a and which is corresponding to the same raw data as the first cache line is modified; and may be invalidated as an entry eviction operation for the snoop filter entry SFE corresponding to the first cache line within the snoop filter circuit 110 is performed. However, embodiments are not limited to the specific reasons why the cache line is invalidated.

If a specific cache line is invalidated, the processor may have to re-read the raw data corresponding to that cache line. Below, for a more concise explanation, a representative case will be described in which the cache line stored in the first cache memory 11a is invalidated.

If the first cache line stored in the first cache memory 11a is invalidated, the first processor 11 may have to re-read the raw data corresponding to the first cache line from the first dedicated memory device DMD1 or the shared memory device 100. Specifically, if the first cache line is a hot cache line (e.g., a cache line that is frequently accessed by the first processor 11), the first processor 11 may have to read the raw data corresponding to the first cache line immediately after the first cache line is invalidated.

The communication speed between the first processor 11 and the first dedicated memory device DMD1 may be faster than the communication speed between the first processor 11 and the shared memory device 100. Therefore, if the raw data corresponding to the first cache line is stored in the first dedicated memory device DMD1 rather than in the shared memory device 100, after the first cache line stored in first cache memory 11a is invalidated, the first processor 11 will be able to access the raw data corresponding to the first cache line more quickly.

That is, if the first cache line is the hot cache line, by migrating the raw data corresponding to the first cache line from the shared memory device 100 to the first dedicated memory device DMD1 before the first cache line is invalidated, then after the first cache line is invalidated, the time taken by the first processor 11 to access the raw data corresponding to the first cache line again may be minimized. Below, how the first processor 11 migrates the raw data corresponding to the first cache line, which is the hot cache line, from shared memory device 100 to the first dedicated memory device DMD1 is described.

The snoop filter circuit 110 may manage a plurality of entry access counts EAC corresponding to the plurality of snoop filter entries SFE, respectively. The plurality of entry access counts EAC may be incremented whenever the access occurs to the corresponding snoop filter entry SFE from the plurality of processors.

The shared memory device 100 may include a migration management circuit 120. The migration management circuit 120 may determine the hotness of each of the plurality of cache lines included in the first cache memory 11a based on the plurality of entry access counts EAC. For example, the migration management circuit 120 may determine the cache line corresponding to the snoop filter entry SFE, which corresponds to an entry access count EAC that is greater than a 'hotness determination threshold value', as the hot cache line. The hotness determination threshold value may be predetermined.

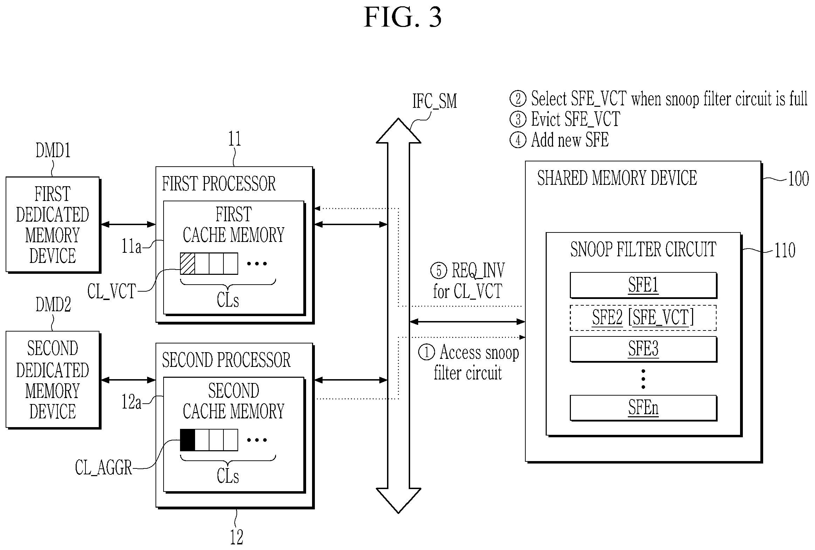

The migration management circuit 120 may issue a migration request for the raw data corresponding to the hot cache line to the first processor 11. That is, according to an embodiment, the shared memory device 100 may trigger the migration of the raw data corresponding to the hot cache line. Therefore, by triggering the migration of the raw data for the hot cache line by the shared memory device 100 before the hot cache line is invalidated by the shared memory device 100, the time taken by the first processor 11 to re-access the raw data for the hot cache line may be minimized. The case in which the cache line stored in the first cache memory 11a by the shared memory device 100 is invalidated is explained in more detail with reference to FIG. 3 below.

The first processor 11 may include a data migrator 11b. The data migrator 11b may migrate the raw data corresponding to the hot cache line from shared memory device 100 to the first dedicated memory device DMD1 in response to the migration request. In this case, even if the hot cache line is invalidated, the time taken by the first processor 11 to access the raw data corresponding to the invalidated cache line may be minimized, so the operation speed of the memory system MS can be improved.

In an embodiment, the data migrator 11b may be implemented as software or as firmware on an operating system running on the first processor 11. However, embodiments are not limited thereto, and the data migrator 11b may be implemented as dedicated hardware to perform the data migration, or as any combination of hardware and software.

If a valid cache line is stored in the first cache memory 11a, the first processor 11 may not read the raw data corresponding to the cache line from the shared memory device 100. That is, if a cache hit occurs in the first cache memory 11a, the first processor 11 may not access (i.e., skip the access to) the shared memory device 100, and thus the migration management circuit 120 may have difficulty determining the hotness of this cache line.

If the migration management circuit 120 incorrectly determines the hotness of the cache line, the operating performance of the memory system MS may be deteriorated. For example, if the migration management circuit 120 determines that the hotness of the hot cache line is excessively low, the state that the raw data corresponding to the hot cache line is stored in the shared memory device 100 may be maintained. In this case, since the first processor 11 may have to access the raw data corresponding to the hot cache line from the shared memory device 100 after the hot cache line is invalidated, it may deteriorate the operation performance of the memory system MS. Conversely, if the migration management circuit 120 determines that the hotness of the hot cache line is excessively high, the raw data corresponding to the cache line that is less frequently accessed by the first processor 11 may be migrated from the shared memory device 100 to the first dedicated memory device DMD1. In this case, the operational load of the data migrator 11b may increase, and the storage space of the first dedicated memory device DMD1 may be likely to be wasted.

The shared memory device 100 may determine the hotness of the cache line within the first cache memory 11a with considering a cache hit within the first cache memory 11a. For example, the shared memory device 100 may include a back snoop circuit 130. The back snoop circuit 130 may perform a back snooping operation. That is, the back snoop circuit 130 may test the status of the cache line stored in the first cache memory 11a.

For example, the back snoop circuit 130 may invalidate the cache line stored in the first cache memory 11a. If an access from the first processor 11 to a snoop filter entry SFE corresponding to the invalidated cache line occurs within a specific time length after the cache line is invalidated, the back snoop circuit 130 may increase the entry access count EAC for the snoop filter entry SFE being accessed. In this case, the entry access count EAC for the cache line, which is cached in the first cache memory 11a and repeatedly accessed (i.e., cache hits) by the first processor 11, may also be increased. That is, in an embodiment, the entry access count EAC may reflect the hotness of the cache line that is cache hit within the first cache memory 11a.

Therefore, the migration management circuit 120 may more accurately determine the hotness of the cache line corresponding to the entry access count EAC. In this case, data migrator 11b may migrate the raw data corresponding to the hot cache line to the first dedicated memory device DMD1, so the operation performance of the memory system MS may be improved.

For brevity, FIG. 1 shows two processors, but embodiments are not limited thereto. For example, in some embodiments, the shared memory device 100 may be shared by three or more processors.

In an embodiment, each of the snoop filter circuit 110, the migration management circuit 120, and the back snoop circuit 130 may be implemented as dedicated hardware or as any combination of a hardware and a software. That is, embodiments are not limited to the specific way in which each of the snoop filter circuit 110, the migration management circuit 120, and the back snoop circuit 130 is implemented.

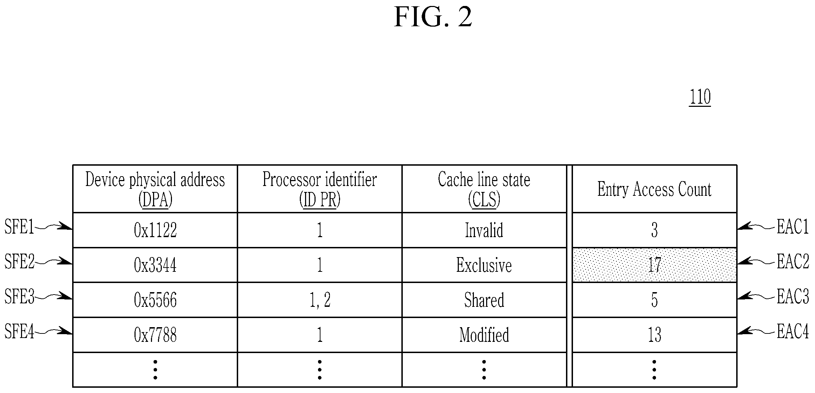

FIG. 2 is a diagram showing a configuration of a snoop filter circuit of FIG. 1 in more detail, according to an embodiment. Referring to FIGS. 1 and 2, the snoop filter circuit 110 may include first to fourth snoop filter entries SFE1 to SFE4 and first to fourth entry access counts EAC1 to EAC4. However, embodiments are not limited to a number of the snoop filter entry SFE and the entry access count EAC included in the snoop filter circuit 110 illustrated in FIGS. 1-2.

The first to fourth snoop filter entries SFE1 to SFE4 may correspond to different device physical addresses DPA within the shared memory device 100. That is, the first to fourth snoop filter entries SFE1 to SFE4 may correspond to different raw data. The first to fourth snoop filter entries SFE1 to SFE4 may correspond to different cache lines. For example, the first snoop filter entry SFE1 may correspond to a cache line cached based on the a raw data stored in the device physical address DPA "0x1122"; the second snoop filter entry SFE2 may correspond to a cache line based on a raw data stored in the device physical address DPA "0x3344"; and the third snoop filter entry SFE3 may correspond a the cache line based on a raw data stored in the device physical address DPA "0x5566"; and the fourth snoop filter entry SFE4 may correspond to a cache line cached based on a raw data stored in the device physical address DPA "0x7788".

The snoop filter circuit 110 may manage each of the first to fourth snoop filter entries SFE1 to SFE4 based on the MESI protocol. That is, each of the first to fourth snoop filter entries SFE1 to SFE4 may include a processor identifier ID_PR for a processor which is caching the corresponding raw data, and a cache line state CLS indicating the state of the cache line stored in the processor. For example, the first snoop filter entry SFE1 may indicate that the cache line corresponding to the raw data stored in the device physical address DPA "0x1122" is stored with an invalid state in the first processor 11; the second snoop filter entry SFE2 may indicate that the cache line corresponding to the raw data stored in the device physical address DPA "0x3344" is cached exclusively on the first processor 11; the third snoop filter entry SFE3 may indicate that the cache line corresponding to the raw data stored in the device physical address DPA "0x5566" is cached in a shared state on the first processor 11 and the second processor 12; and the fourth snoop filter entry SFE4 may indicate that the cache line corresponding to the raw data stored in the device physical address DPA "0x7788" is cached in the first processor 11 in a modified state compared with the raw data.

In some embodiment, a maximum number of snoop filter entries SFE that may be stored in the snoop filter circuit 110 may be determined in advance. That is, the number of the snoop filter entry SFE that may be stored in the snoop filter circuit 110 may be finite (e.g., limited). The maximum number of the snoop filter entry SFE that may be stored in the snoop filter circuit 110 may be referred to as a 'maximum entry number'.

In an embodiment, the snoop filter circuit 110 may include a snoop filter entry SFE corresponding to each of the valid cache lines stored in the plurality of processors. For example, if the valid cache line, corresponding to a raw data stored in the shared memory device 100, is stored in the first cache memory 11a or the second cache memory 12a, the snoop filter circuit 110 may include the snoop filter entry SFE corresponding thereto. On the other hand, if the invalid cache line corresponding to the raw data stored in the shared memory device 100 is stored in the first cache memory 11a or the second cache memory 12a, the snoop filter circuit 110 may or may not include the corresponding snoop filter entry SFE.

The first processor 11 and the second processor 12 may access an any snoop filter entry SFE. For example, the first processor 11 and/or the second processor 12 may change the state of the cache line stored in the cache memory and then update the cache line state indicated by the snoop filter entry SFE by accessing the snoop filter entry SFE. More specifically, the first processor 11 may update the cache line corresponding to the raw data stored in the device physical address DPA "0x3344". In this case, the first processor 11 may change the cache line state indicated by the second snoop filter entry SFE2 from 'exclusive' to 'modified'. As another example, the first processor 11 and/or the second processor 12 may store invalid cache lines in the cache memory. In this case, the first processor 11 and/or the second processor 12 may access the snoop filter entry SFE to identify the position where the valid data corresponding to the invalid cache line is stored (e.g., the raw data stored in the shared memory device 100, or the valid cache line cached in another processor based on the raw data). In more detail, if the invalid cache line is stored in the second cache memory 12a and the device physical address DPA corresponding thereto is "0x7788", the second processor 12 may access the fourth snoop filter entry SFE4 to identify that the valid version of data corresponding to the invalid cache line is cached in the first processor 11. However, the scope of the present disclosure will not be limited to the specific circumstance and manner in which the snoop filter entry SFE is accessed.

The first to fourth entry access counts EAC1 to EAC4 may correspond to the first to fourth snoop filter entries SFE1 to SFE4, respectively. The first to fourth entry access counts EAC1 to EAC4 may each represent a number of times that the corresponding snoop filter entry has been accessed from the plurality of processors. For example, the first entry access count EAC1 may represent the number of times that the first snoop filter entry SFE1 has been accessed from the plurality of processors.

The migration management circuit 120 may determine the hotness of the cache lines corresponding to the first to fourth snoop filter entries SFE1 to SFE4, based on a 'hotness determination threshold value (hereinafter, referred to as "TH_HD")' and the first to fourth entry access counts EAC1 to EAC4. For example, the migration management circuit 120 may determine whether the cache line corresponding to the second snoop filter entry SFE2 is a hot cache line by comparing the second entry access count EAC2 and the hotness determination threshold value TH_HD.

For a more detailed example, 'the hotness determination threshold value TH_HD' may be '15'. In this case, as illustrated in the example of FIG. 2, since the second entry access count EAC2 (e.g., 17) is greater than the hotness determination threshold value TH_HD, the migration management circuit 120 may determine the cache line corresponding to the second snoop filter entry SFE2 as a hot cache line. On the other hand, if the second entry access count EAC2 is less than the hotness determination threshold value TH_HD, the migration management circuit 120 will be able to determine that the cache line corresponding to the second snoop filter entry SFE2 is not the hot cache line. For example, in the example illustrated in FIG. 2, the first, third, and fourth snoop filter entries SFE1, SFE3, and SFE4 would be determined by the migration management circuit 120 as not being hot cache lines, since the first, third and fourth entry access counts EAC1, EAC3, and EAC4 are each below 15.

FIG. 3 is a diagram showing a case in which a cache line stored in a first cache memory is invalidated by a shared memory device of FIG. 1, according to an embodiment. Referring to FIG. 1 to FIG. 3, the first cache memory 11a and the second cache memory 12a may include one or more cache line CL, respectively.

The first cache memory 11a may include a victim cache line CL_VCT. The victim cache line CL_VCT may be in a valid state. The second snoop filter entry SFE2 may correspond to the victim cache line CL_VCT. For example, the second snoop filter entry SFE2 and the victim cache line CL_VCT may correspond to the same device physical address DPA.

The snoop filter circuit 110 may include first to n-th snoop filter entries SFE1 to SFEn. The maximum entry number of the snoop filter circuit 110 may be 'n'. That is, the snoop filter circuit 110 may be in a full-state.

When the snoop filter circuit 110 is in a full-state, the second processor 12 may access the snoop filter circuit 110 ("circle 1": access snoop filter circuit). For example, the second cache memory 12a may include an aggressor cache line CL_AGGR with invalid state. In this case, to identify the location of the valid data corresponding to the aggressor cache line CL_AGGR, the second processor 12 may look up (e.g., snoop filter query, snoop filter check, snoop filter retrieve, or snoop filter access), by providing a device physical address DPA of the raw data corresponding to the aggressor cache line CL_AGGR to the snoop filter circuit 110, the snoop filter entry SFE corresponding to the device physical address DPA from the snoop filter circuit 110. As another example, the second cache memory 12a may newly cache the raw data stored in the shared memory device 100 as the aggressor cache line CL_AGGR. In this case, to identify whether the raw data to be newly cached is currently cached in other processor, the second processor 12 may look up, by providing a device physical address DPA of the raw data to be newly cached to the snoop filter circuit 110, a snoop filter entry SFE for the device physical address DPA from the snoop filter circuit 110. However, embodiments are not be limited to the specific circumstances in which the access to the snoop filter circuit 110 occurs.

The snoop filter circuit 110 may not include the snoop filter entry SFE corresponding to the device physical address DPA provided from the second processor 12. For example, the first to n-th snoop filter entries SFE1 to SFEn each may correspond to a device physical address different from the device physical address provided by the second processor 12.

If the snoop filter entry SFE corresponding to the access for the snoop filter circuit 110 is not included in the snoop filter circuit 110, the snoop filter circuit 110 may newly add a snoop filter entry SFE corresponding to the access to the snoop filter circuit 110. For example, the snoop filter circuit 110 may store the new snoop filter entry SFE corresponding to the received device physical address DPA.

However, if the snoop filter circuit 110 is the full-state, the snoop filter circuit 110 may evict at least one of the first to n-th snoop filter entries SFE1 to SFEn to add the new snoop filter entry SFE. In other words, when the snoop filter circuit 110 is in a full-state, the snoop filter circuit 110 may perform an entry eviction operation. In this case, the snoop filter circuit 110 may select one or more victim snoop filter entry SFE_VCT to be evicted from the first to n-th snoop filter entries SFE1 to SFEn ("circle 2": Select SFE_VCT when the snoop filter circuit is full). For example, the snoop filter circuit 110 may select the second snoop filter entry SFE2 as the victim snoop filter entry SFE_VCT to add the new snoop filter entry SFE for the received device physical address DPA.

After selecting the victim snoop filter entry SFE_VCT, the snoop filter circuit 110 may issue an entry eviction decision notification for the victim snoop filter entry SFE_VCT. For example, the snoop filter circuit 110 may provide the entry eviction decision notification for the victim snoop filter entry SFE_VCT to the migration management circuit 120. The operation of the migration management circuit 120 in response to the entry eviction decision notification is described in more detail below referring to FIG. 4.

In an embodiment, the snoop filter circuit 110 may select the victim snoop filter entry SFE_VCT based on various selection algorithms, such as a least recently use (LRU). However, embodiments are not limited to the type of an algorithm used by the snoop filter circuit 110 to select the victim snoop filter entry SFE_VCT. For example, the snoop filter circuit 110 may select the victim snoop filter entry SFE_VCT based on the cache line state CLS of each of the first to n-th snoop filter entries SFE1 to SFEn.

The snoop filter circuit 110 may evict the victim snoop filter entry SFE_VCT ("circle 3": Evict SFE_VCT). For example, the snoop filter circuit 110 may erase the second snoop filter entry SFE2.

The snoop filter circuit 110 may add the new snoop filter entry SFE ("circle 4": Add new SFE). For example, the snoop filter circuit 110 may newly store a snoop filter entry SFE for the device physical address DPA received from second processor 12.

The shared memory device 100 may invalidate the victim cache line CL_VCT. That is, the shared memory device 100 may invalidate the cache line corresponding to the erased second snoop filter entry SFE2. For example, the shared memory device 100 may provide an invalidation request REQ_INV (e.g., a back invalidation request) for the victim cache line CL_VCT to the first processor 11 ("circle 5": REQ_INV for CL_VCT). The first processor 11 may invalidate the victim cache line CL_VCT in response to the invalidation request REQ_INV.

That is, the victim cache line CL_VCT may be invalidated by the shared memory device 100. Therefore, before issuing the invalidation request REQ_INV for the victim cache line CL_VCT, based on the hotness of the victim cache line CL_VCT, the shared memory device 100 may issue a migration request for the raw data corresponding to the victim cache line CL_VCT. In this case, the time taken by the first processor 11 to access the raw data corresponding to the victim cache line CL_VCT after the victim cache line CL_VCT is invalidated may be minimized, so the operation performance of the memory system MS may be improved.

For a more concise explanation, FIG. 3 shows an embodiment in which the victim cache line CL_VCT is invalidated as the entry eviction operation for the victim snoop filter entry SFE _VCT is performed, but embodiments are not limited to the specific reasons why the victim cache line CL_VCT is invalidated.

For concise description, FIG. 3 illustrates an embodiment in which the victim cache line CL_VCT is invalidated after the new snoop filter entry SFE is stored in the snoop filter circuit 110, but embodiments are not limited thereto. For example, the shared memory device 100 may invalidate the victim cache line CL_VCT before evicting the victim snoop filter entry SFE_VCT; or may invalidate the victim cache line CL_VCT between a time point evicting the victim snoop filter entry SFE_VCT and a time point storing the new snoop filter entry SFE.

FIG. 4 is a diagram showing in more detail how a migration of FIG. 1 is performed, according to an embodiment. Below, for a more concise explanation, an embodiment will be described in which the raw data corresponding to the victim cache line CL_VCT is migrated before the victim cache line CL_VCT is invalidated, with reference to FIG. 1 to FIG. 4. For example, operations a-d below may be performed between the operations "circle 2" to "circle 5" described above with reference to FIG. 3.

The migration management circuit 120 may receive the entry eviction decision notification for the victim snoop filter entry SFE_VCT. In this case, the migration management circuit 120 may be able to recognize that the victim snoop filter entry SFE_VCT is soon be evicted from the snoop filter circuit 110.

The migration management circuit 120 may determine the hotness of the victim cache line CL_VCT (a: Determine hotness of CL_VCT). That is, the migration management circuit 120 may determine the hotness of the victim cache line CL_VCT based on the entry access count EAC corresponding to the victim snoop filter entry SFE_VCT. For example, the migration management circuit 120 may determine the hotness of the victim cache line CL_VCT by comparing the second entry access count EAC2 and the hotness determination threshold value TH_HD. For concise explanation, in the following, it is assumed that the victim cache line CL_VCT is determined to be a hot cache line.

The memory bank BNK may include a plurality of pages PG. The plurality of pages PG may each include a plurality of data. The shared memory device 100 may perform input/output operations by a unit of the page PG.

In an embodiment, the capacity of one cache line CL may be smaller than the capacity of one page PG.

In an embodiment, the raw data corresponding to one cache line CL may be included in only single page PG.

The migration management circuit 120 may identify a migration target page PG_MTG including the raw data for the victim cache line CL_VCT (b: Identify PG_MTG including the raw data for the CL_VCT). For example, the migration management circuit 120 may identify the page PG corresponding to the device physical address DPA indicated by the victim snoop filter entry SFE_VCT as the migration target page PG_MTG. For a more detailed example, the device physical address DPA indicated by the victim snoop filter entry SFE_VCT may be "0x3344", and a specific page PG of the memory bank BNK may store data corresponding to the device physical address DPA in the range of "0x3300" to "0x3400". In this case, the migration management circuit 120 may identify the corresponding page PG as the migration target page PG_MTG.

The migration management circuit 120 may provide the migration request REQ_MIG for the migration target page PG_MTG to the first processor 11 (c: REQ_MIG of PG_MTG).

The data migrator 11b may migrate the data of the migration target page PG_MTG in response to the migration request REQ_MIG (d: Migrate data of PG_MTG). For example, the data migrator 11b may migrate the data in the migration target page PG_MTG to the first dedicated memory device DMD1. In this case, the data of the migration target page PG_MTG may be stored in the first dedicated memory device DMD1.

That is, according to an embodiment, if the victim cache line CL_VCT is the hot cache line, the raw data corresponding to the victim cache line CL_VCT may be migrated to the first dedicated memory device DMD1 before the victim cache line CL_VCT is invalidated.

In an embodiment, the data migrator 11b may perform the migration operation by a method of reading the migration target page PG_MTG from the shared memory device 100 and then writing the read data to the first dedicated memory device DMD1. However, embodiments are not limited thereto, and the data migrator 11b may also migrate the data stored in the migration target page PG_MTG to the first dedicated memory device DMD1 by issuing a direct memory access (DMA) command to the shared memory device 100. That is, embodiments are not limited to the specific way that the data migrator 11b performs the migration.

In an embodiment, the data migrator 11b may re-map a virtual address used by an application mapped to a physical address of the migration target page PG_MTG running on the first processor 11, to a physical address of data newly stored within the first dedicated memory device DMD1. Therefore, after the migration for the migration target page PG_MTG is completed, if the access to the migration target page PG_MTG occurs from the application program running on the first processor 11, the first processor 11 may access the first dedicated memory device DMD1 instead of the shared memory device 100.

In an embodiment, the data migrator 11b may migrate the entire page including the raw data corresponding to the victim cache line CL_VCT (e.g., the migration target page PG_MTG).

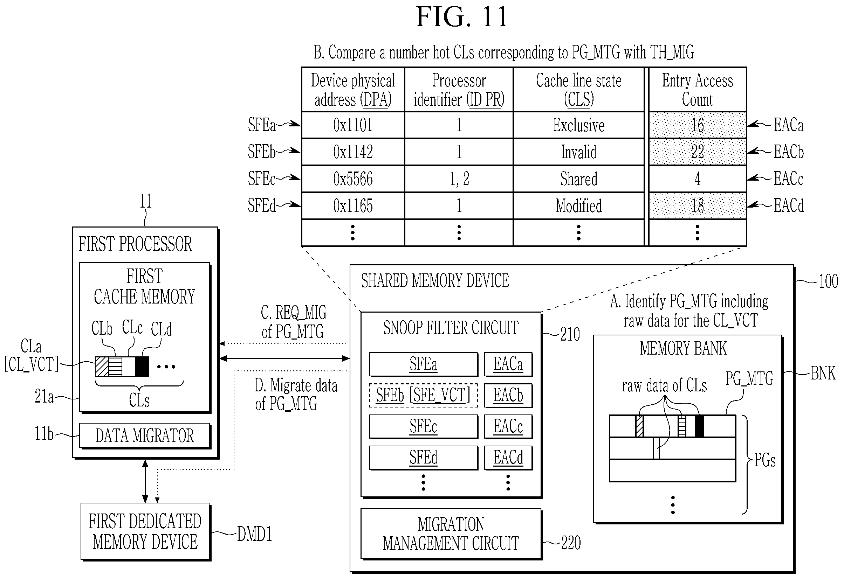

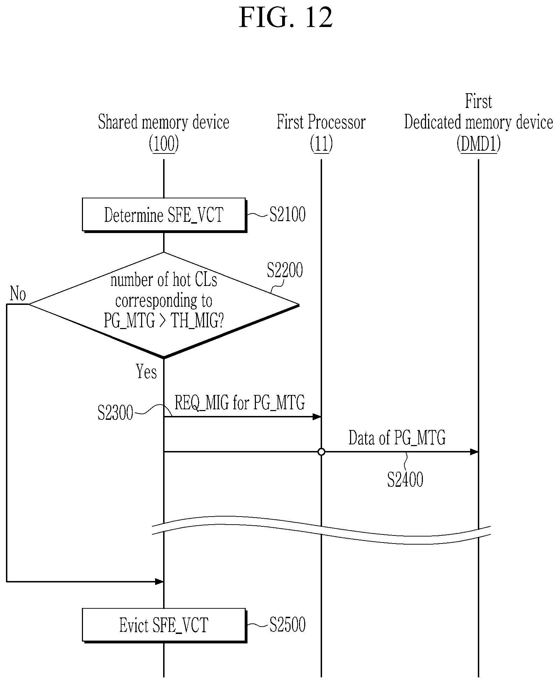

In an embodiment, the shared memory device 100 may be implemented to issue the migration request REQ_MIG only when a number of raw data corresponding to hot cache lines in the migration target page PG_MTG is greater than the 'migration threshold value'. In this case, the raw data corresponding to the hot cache line may be migrated more efficiently, so the operation performance of the memory system MS may be improved. The operation of the shared memory device 100 to decide whether to issue the migration request REQ_MIG based on the migration threshold value is described in more detail with reference to FIG. 11 and FIG. 12 below.

In an embodiment, the shared memory device 100 may collectively request the migration of the plurality of raw data corresponding to the hot cache lines. For example, if the plurality of raw data corresponding to the hot cache line are each included in the different page PG, the shared memory device 100 may migrate the plurality of raw data to the single page and then issue the migration request for that page. However, embodiments are not limited thereto.

Meanwhile, if the victim cache line CL_VCT is determined to be not a hot cache line in the operation a described above, the shared memory device 100 may not perform the operations b to d described above. For example, if the victim cache line CL_VCT is determined to be not a hot cache line, the shared memory device 100 may immediately transmit the invalidation request REQ_INV for the victim cache line CL_VCT.

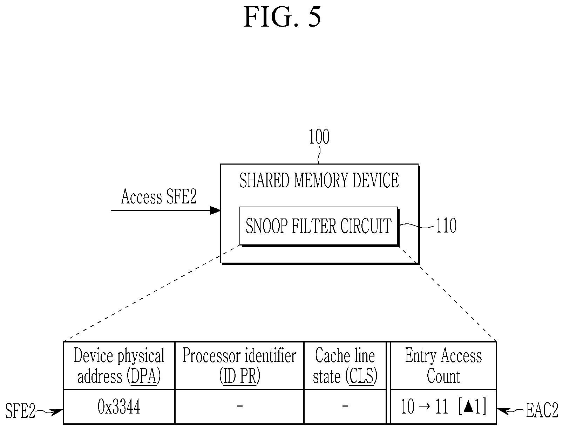

FIG. 5 is a diagram showing how an entry access count of FIG. 2 is increased, according to an embodiment. Below, the method of increasing the second entry access count EAC2 will be described representatively with reference to FIG. 1 to FIG. 5. However, embodiments are not limited thereto, and other entry access counts EAC may also increase in a similar manner thereto.

Each of the plurality of processors may access the second snoop filter entry SFE2. For example, the first processor 11 or the second processor 12 may access the second snoop filter entry SFE2 to identify the location of the valid data for the raw data stored in the device physical address DPA "0x3344".

As a more detailed example, the first processor 11 may store the invalid cache line corresponding to the raw data stored in the device physical address DPA "0x3344". The first processor 11 may access the second snoop filter entry SFE2, to identify the location where the valid data for the raw data stored in the device physical address DPA "0x3344" is stored, by providing the device physical address DPA "0x3344" to the shared memory device 100.

As another example, the second processor 12 may access the second snoop filter entry SFE2 before newly caching the raw data stored in the device physical address DPA "0x3344". For example, the second processor 12 may access the second snoop filter entry SFE2 to identify the location (e.g., the memory bank BNK or the cache memory of another processor) where the valid version of data is stored for the raw data stored in the device physical address DPA "0x3344".

The processor identifier ID_PR and the cache line state CLS indicated by the second snoop filter entry SFE2 may vary depending on when the access to the second snoop filter entry SFE2 occurs. Therefore, the detailed description of the processor identifier ID_PR and the cache line state CLS of the second snoop filter entry SFE2 is omitted.

The snoop filter circuit 110 may increase the second entry access count EAC2 by '1' in response to the access to the second snoop filter entry SFE2. That is, the second entry access count EAC2 may be increased stepwise as the second snoop filter entry SFE2 is accessed by the plurality of processors.

For concise explanation, an embodiment is described representatively in which the arbitrary processor accesses the second snoop filter entry SFE2 by providing the device physical address DPA corresponding to the second snoop filter entry SFE2 to the snoop filter circuit 110 with reference to FIG. 5, but embodiments are not limited thereto. For example, the snoop filter circuit 110 may allocate the different identifiers for the plurality of snoop filter entries SFE. In this case, the arbitrary processor may also access the second snoop filter entry SFE2 by providing the identifier for the second snoop filter entry SFE2 to the snoop filter circuit 110. That is, embodiments are not limited to the specific method in which the access to the snoop filter entry occurs.

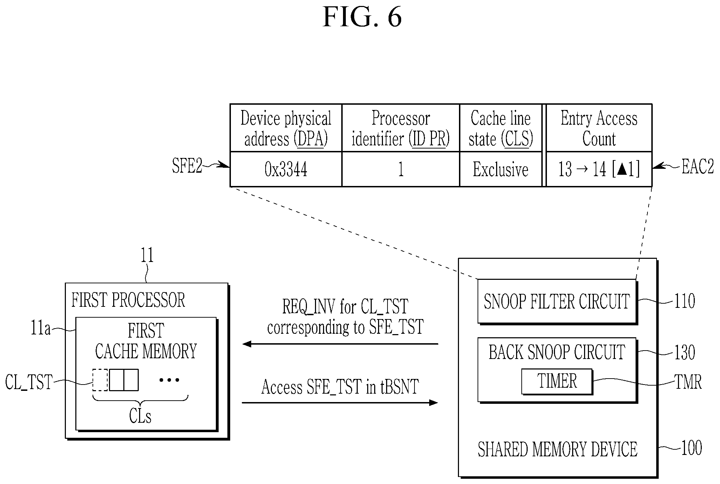

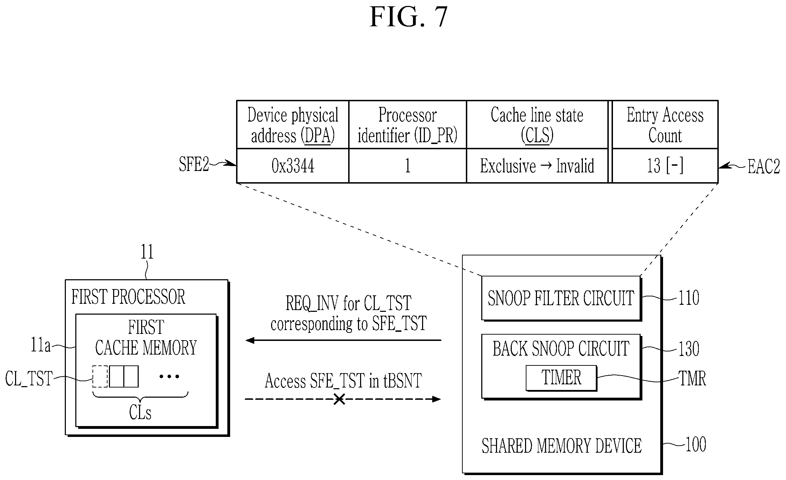

According to an embodiment, the second entry access count EAC2 may also be increased if the data stored in the device physical address DPA corresponding to the second snoop filter entry SFE2 is cached within a processor and then repeatedly accessed from the processor (e.g., accessed in a cache hit manner). The specific manner in which the second entry access count EAC2 increases even when the data stored in the device physical address DPA corresponding to the second snoop filter entry SFE2 is accessed in the cache hit manner is described in more detail with reference to FIG. 6 and FIG. 7 below.

FIG. 6 and FIG. 7 are drawings showing an operation of a back snoop circuit of FIG. 1, according to some embodiments.

First, referring to FIG. 6, the back snoop circuit 130 may determine one of the plurality of snoop filter entries SFE included in the snoop filter circuit 110 as a test snoop filter entry SFE_TST. For concise explanation, below, it is assumed that the back snoop circuit 130 determines the second snoop filter entry SFE2 as the test snoop filter entry SFE_TST. However, embodiments are not limited thereto, and the back snoop circuit 130 may also determine any snoop filter entry SFE as the test snoop filter entry SFE_TST.

The cache line corresponding to the test snoop filter entry SFE_TST may be referred to as a test cache line CL_TST.

In an embodiment, the back snoop circuit 130 may determine the snoop filter entry SFE whose corresponding cache line state indicates 'exclusive', as the test snoop filter entry SFE_TST. However, embodiments are not limited thereto. For example, the back snoop circuit 130 may determine the snoop filter entry SFE whose corresponding cache line indicates 'modified', as the test snoop filter entry SFE_TST.

The back snoop circuit 130 may perform a back snoop operation for the test cache line CL_TST. That is, the back snoop circuit 130 may test the hotness of the test cache line CL_TST. Below, the back snooping operation for the test cache line CL_TST is described in more detail.

The back snoop circuit 130 may transmit the invalidation request REQ_INV for the test cache line CL_TST. In this case, first processor 11 may invalidate the test cache line CL_TST in response to the invalidation request REQ_INV.

After the test cache line CL_TST is invalidated, if the operation of the first processor 11 requires the data corresponding to the test cache line CL_TST, the first processor 11 may access the test snoop filter entry SFE_TST. For example, the first processor 11 may access the test snoop filter entry SFE_TST to identify the location of the valid data corresponding to the test cache line CL_TST. On the other hand, if the data corresponding to the test cache line CL_TST is not required for the operation of the first processor 11 after the test cache line CL_TST is invalidated, the first processor 11 may not access the test snoop filter entry SFE_TST. In other words, the first processor 11 may not access the test snoop filter entry SFE_TST until the operation of the first processor 11 requires the data corresponding to the test cache line CL_TST.

If the test cache line CL_TST is data that is accessed frequently within the first processor 11, the first processor 11 may access the test snoop filter entry SFE_TST within a short time after the test cache line CL_TST is invalidated. On the other hand, if the test cache line CL_TST is data that is accessed infrequently within the first processor 11, the first processor 11 may not access the test snoop filter entry SFE_TST for a long time after the test cache line CL_TST is invalidated.

The back snoop circuit 130 may include a timer TMR. The back snoop circuit 130 may measure an elapsed time from a time an invalidation request REQ_INV for the test cache line CL_TST is issued based on the timer TMR.

An access to the test snoop filter entry SFE_TST may occur before a back snoop test time tBSNT, which is a time length, has elapsed from a time point when the invalidation request REQ_INV for the test cache line CL_TST is issued. The back snoop test time tBSNT may be predetermined. The back snoop circuit 130 may increase the entry access count EAC corresponding to the test snoop filter entry SFE_TST by '1'. For example, the back snoop circuit 130 may increase the second entry access count EAC2 by '1'.

In an embodiment, the back snoop circuit 130 may increase the entry access count EAC corresponding to the test snoop filter entry SFE_TST by a size other than '1', according to a time length between a time point when the invalidation request REQ_INV for the test cache line CL_TST is issued and a time point when the access to the test snoop filter entry SFE_TST occurs. For example, if the access to the test snoop filter entry SFE_TST occurs within a very short time from the time an invalidation request REQ_INV for the test cache line CL_TST is issued, the back snoop circuit 130 may also increase the entry access count EAC corresponding to the test snoop filter entry SFE_TST by '2'. However, embodiments are not limited thereto.

Referring to FIG. 1 to FIG. 7, there may be no access to the test snoop filter entry SFE_TST until the back snoop test time tBSNT has elapsed from the time point when the invalidation request REQ_INV for the test cache line CL_TST is issued. In this case, the back snoop circuit 130 may invalidate the test snoop filter entry SFE_TST. For example, back snoop circuit 130 may change the cache line state CLS indicated by the test snoop filter entry SFE_TST from 'exclusive' to 'invalid'.

The back snoop circuit 130 may maintain the entry access count EAC corresponding to the test snoop filter entry SFE_TST. For example, the back snoop circuit 130 may not change the second entry access count EAC2. However, embodiments are not limited thereto. For example, the entry access count EAC corresponding to the test snoop filter entry SFE_TST may be decreased to '0' or by '1'.

In an embodiment, the back snoop circuit 130 may repeatedly perform a back snoop operation for an arbitrary test snoop filter entry SFE_TST with a regular time interval. However, embodiments are not limited to the specific time at which the back snoop circuit 130 performs the back snoop operation.

In an embodiment, the back snoop circuit 130 may determine whether to perform the back snoop operation based on various parameters, such as the number of the snoop filter entries included in the snoop filter circuit 110, the ratio of the non-invalid snoop filter entries among the snoop filter entries included in the snoop filter circuit 110, and the like. However, embodiments are not limited to the specific conditions for the back snoop circuit 130 to perform the back snoop operation.

According to an embodiment, the hotness of the test cache line CL_TST may be reflected to the entry access count EAC corresponding to the test snoop filter entry SFE_TST. In this case, the migration management circuit 120 will be able to more accurately determine the hotness of the test cache line CL_TST.

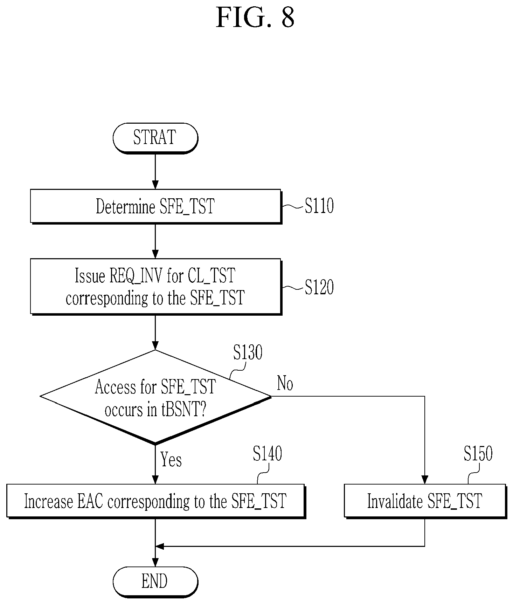

FIG. 8 is a flowchart showing an operation of a shared memory device performing a back snoop operation according to an embodiment. Referring to FIG. 1 to FIG. 8, in operation S110, the shared memory device 100 may determine the test snoop filter entry SFE_TST. For example, the back snoop circuit 130 may determine one of the plurality of snoop filter entries SFE included in the snoop filter circuit 110 as the test snoop filter entry SFE_TST.

In operation S120, the shared memory device 100 may issue an invalidation request REQ_INV for the test cache line CL_TST corresponding to the test snoop filter entry SFE_TST. For example, the back snoop circuit 130 may transmit the invalidation request REQ_INV for the test cache line CL_TST to the first processor 11. In this case, the first processor 11 may invalidate the test cache line CL_TST in response to the invalidation request REQ_INV.

In operation S130, the shared memory device 100 may determine whether the access to the test snoop filter entry SFE_TST occurs within the back snoop test time tBSNT. For example, the back snoop circuit 130 may determine whether the access to the test snoop filter entry SFE_TST from the first processor 11 occurs within the back snoop test time tBSNT after the above-described S120 step is performed.

If it is determined that the access to the test snoop filter entry SFE_TST has occurred within the back snoop test time tBSNT (operation S130, Y), operation S140 following may be performed. If it is determined that no access to the test snoop filter entry SFE_TST has occurred within the back snoop test time tBSNT (operation S130, N), operation following may be performed.

In operation S140, the shared memory device 100 may increase the entry access count EAC corresponding to the test snoop filter entry SFE_TST. For example, the back snoop circuit 130 may increase the entry access count EAC corresponding to the test snoop filter entry SFE_TST by '1'.

In operation , the shared memory device 100 may invalidate the test snoop filter entry SFE_TST. For example, the back snoop circuit 130 may change the cache line state CLS indicated by the test snoop filter entry SFE_TST to 'invalid'.

In an embodiment, the shared memory device 100 may repeatedly perform the back snoop operation. That is, the shared memory device 100 may repeatedly perform the operations S110 to S150 described above. In this case, even if the first processor 11 accesses the test cache line CL_TST with high frequency, the entry access count EAC corresponding to the test snoop filter entry SFE_TST may continuously increase. The shared memory device 100 may perform the back snoop operation in a similar manner for each of the plurality of snoop filter entries SFE. Therefore, the plurality of entry access counts EAC may more accurately reflect the hotness for the corresponding cache line CL.

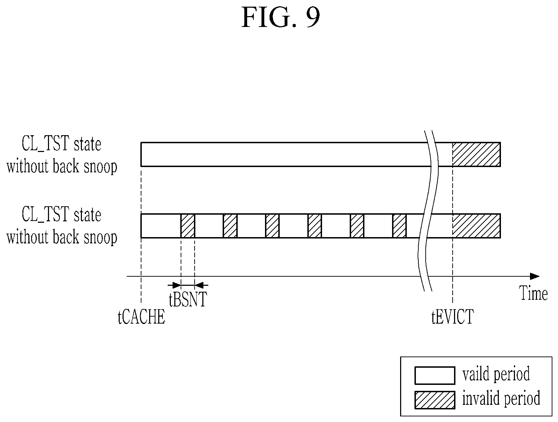

FIG. 9 is a diagram showing an effect of a back snoop operation on a test cache line according to an embodiment. Referring to FIG. 1 to FIG. 9, the test cache line CL_TST may be cached in the first cache memory 11a at a cache time point tCACHE. For example, at the cache time point tCACHE, the first processor 11 may cache the raw data stored in the device physical address DPA corresponding to the test snoop filter entry SFE_TST in the first cache memory 11a as the test cache line CL_TST.

The test cache line CL_TST may be invalidated (or evicted) from the first cache memory 11a at an eviction time point tEVICT. For example, similarly to what was described above referring to FIG. 3, the shared memory device 100 may perform the entry eviction operation for the test snoop filter entry SFE_TST at the eviction time point tEVICT.

If the shared memory device 100 does not perform the back snoop operation, even if the first processor 11 repeatedly accesses the test cache line CL_TST between the cache time point tCACHE and the eviction time point tEVICT (i.e., even if the test cache line CL_TST is a hot cache line), the entry access count EAC corresponding to the test snoop filter entry SFE_TST may not reflect the access by the first processor 11. In this case, the entry access count EAC corresponding to the test snoop filter entry SFE_TST may not properly reflect the hotness of the test cache line CL_TST.

In contrast, according to an embodiment, the shared memory device 100 may perform the back snoop operation repeatedly between the cache time point tCACHE and the eviction time point tEVICT. In this case, the test cache line CL_TST may be invalid while each back snoop operation is performed (more specifically, during the back snoop test time tBSNT). That is, when the first processor 11 accesses the test cache line CL_TST while each back snoop operation is performed, the entry access count EAC corresponding to the test snoop filter entry SFE_TST may increase. Therefore, according to an embodiment, the entry access count EAC corresponding to the test snoop filter entry SFE_TST may appropriately reflect the hotness of the test cache line CL_TST.

If the back snoop operation is performed repeatedly, the hotness of the test cache line CL_TST may be reflected to the entry access count EAC even after the cache time point tCACHE, so the entry access count EAC may more accurately represent a temporal locality of the test cache line CL_TST. That is, the back snoop operation may be performed even at a time point close to the eviction time point tEVICT, so the entry access count EAC may more accurately represent the temporal locality of the test cache line CL_TST.

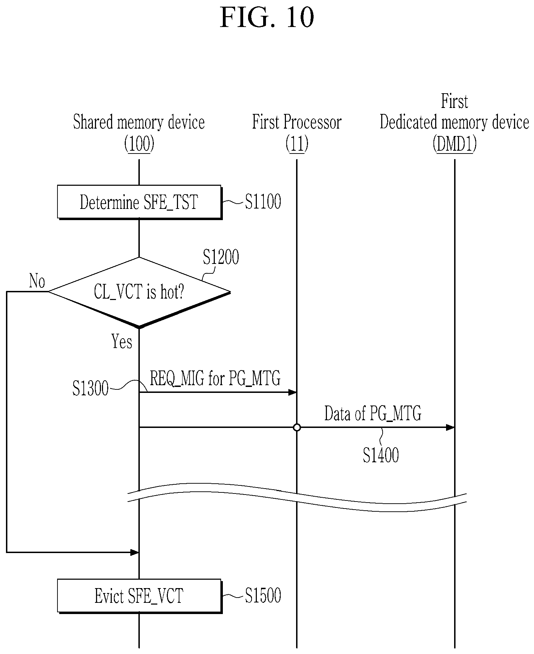

FIG. 10 is a flowchart showing how a migration is performed according to an embodiment. Referring to FIG. 1 to FIG. 10, in operation S1100, the shared memory device 100 may determine the victim snoop filter entry SFE_VCT. For example, the migration management circuit 120 may determine one snoop filter entry SFE among the plurality of snoop filter entries SFE stored in the snoop filter circuit 110 as the victim snoop filter entry SFE_VCT.

In operation S1200, the shared memory device 100 may determine whether the victim cache line CL_VCT is hot. For example, the migration management circuit 120 may determine whether the victim cache line CL_VCT is the hot cache line by comparing the entry access count EAC corresponding to the victim snoop filter entry SFE_VCT with the hotness determination threshold value TH _HD. If the victim cache line CL_VCT is determined to be the hot cache line, a following step S1300 may be performed, and if the victim cache line CL_VCT is determined to be not the hot cache line, a following step S1500 may be performed.

In an embodiment, prior to performing operation S1200, the shared memory device 100 may manage the entry access count EAC corresponding to the victim snoop filter entry SFE_VCT by repeatedly performing the back snoop operation described above referring to FIG. 8. In this case, the hotness of the victim cache line CL_VCT may be accurately determined in operation S1200.

In operation S1300, the shared memory device 100 may provide the migration request REQ_MIG for the migration target page PG_MTG to the first processor 11. For example, the migration management circuit 120 may provide the migration request REQ_MIG for the migration target page PG_MTG corresponding to the device physical address DPA indicated by the victim snoop filter entry SFE_VCT to the first processor 11.

In operation S1400, the first processor 11 may migrate the data of the migration target page PG_MTG from the shared memory device 100 to the first dedicated memory device DMD1 in response to the migration request REQ_MIG. For example, the data migrator 11b may read the migration target page PG_MTG from the shared memory device 100 and then write the read data to the first dedicated memory device DMD1; or issue a DMA command to the shared memory device 100 to migrate the data of the migration target page PG_MTG from the shared memory device 100 to the first dedicated memory device DMD1. In this case, the data migrator 11b may re-map the virtual address used in the application program mapped to the physical address of the migration target page PG_MTG running on the first processor 11 to the physical address of the data newly stored in the first dedicated memory device DMD1.

In operation S1500, the shared memory device 100 may evict the victim snoop filter entry SFE_VCT. For example, the snoop filter circuit 110 may evict the victim snoop filter entry SFE_VCT and store a new snoop filter entry SFE.

Therefore, according to an embodiment, after the step S1500 is performed, if the first processor 11 needs the raw data corresponding to the victim cache line CL_VCT, the first processor 11 may access the first dedicated memory device DMD1 instead of the shared memory device 100. In this case, the raw data corresponding to the victim cache line CL_VCT may be read with faster speed, so the operation performance of the memory system MS may be improved.

FIG. 11 is a diagram showing in more detail how a migration of FIG. 1 is performed according to an embodiment. Referring to FIG. 1 to FIG. 11, the snoop filter circuit 110 may be implemented as a snoop filter circuit 210, and the migration management circuit 120 may be implemented as a migration management circuit 220. The first cache memory 11a may be implemented as a first cache memory 21a.

The first cache memory 21a may store a plurality of cache lines CL. For example, the first cache memory 21a may store first to fourth cache lines CLa to CLd.

The snoop filter circuit 210 may include a plurality of snoop filter entries SFE and a plurality of entry access counts EAC. For example, the snoop filter circuit 210 may include first to fourth snoop filter entries SFEa to SFEd and first to fourth entry access counts EACa to EACd. The first to fourth entry access counts EACa to EACd may correspond to the first to fourth snoop filter entries SFEa to SFEd, respectively. The configuration and function of the entry access count EAC and snoop filter entry SFE have been described previously with reference to FIG. 1 to FIG. 11, and is not described in further detail for conciseness.

The migration management circuit 220 may select the victim snoop filter entry SFE_VCT in the similar manner as previously referred to FIG. 3, described. For example, the migration management circuit 220 may select the second snoop filter entry SFEb as the victim snoop filter entry SFE_VCT.

The migration management circuit 220 may determine whether to issue a migration request REQ_MIG for the migration target page PG_MTG corresponding to the victim snoop filter entry SFE_VCT based on a migration threshold value (hereinafter, referred to as "TH_MIG").

First, the migration management circuit 220 may identify the migration target page PG_MTG including the raw data for the victim cache line CL_VCT (A. the identify PG_MTG including the raw data for the CL_VCT). For example, the migration management circuit 220 may identify the migration target page PG_MTG in the similar manner to operation b described above referring to FIG. 4.

The migration management circuit 220 may compare the number of the hot cache lines corresponding to the migration target page PG_MTG with a migration threshold value.

In more detail, the migration target page PG_MTG may store data corresponding to the device physical address DPA in the range of "0x1100" to "0x1200". In this case, the migration management circuit 220 may identify the snoop filter entries SFE whose the corresponding device physical address DPA is included in the device physical address range of the migration target page PG_MTG. For example, the migration management circuit 220 may identify the first snoop filter entry SFEa corresponding to the device physical address DPA "0x1101", the second snoop filter entry SFEb corresponding to the device physical address DPA "0x1142", and the fourth snoop filter entry SFEd corresponding to the device physical address DPA "0x1165".

The migration management circuit 220 may determine the hotness of each cache line corresponding to the identified snoop filter entries SFE. For example, the migration management circuit 220 may determine the hotness of the first cache line CLa based on the first entry access count EACa; may determine the hotness of the second cache line CLb based on the second entry access count EACb; and may determine the hotness of the fourth cache line CLd based on the fourth entry access count EACd. That is, the migration management circuit 220 may determine the hotness of the cache lines corresponding to the plurality of raw data stored in the migration target page PG_MTG.

The migration management circuit 220 may compare the number of the cache lines determined as the hot cache lines with the migration threshold value TH_MIG. The migration threshold value TH_MIG may be an integer greater than or equal to 2. The migration management circuit 220 may perform operations C and D below when the number of the hot cache lines corresponding to the migration target page PG_MTG is greater than the migration threshold value.

The migration management circuit 120 may provide the migration request REQ_MIG for the migration target page PG_MTG to the first processor 11 (C. REQ_MIG of PG_MTG). The data migrator 11b may migrate the data of the migration target page PG_MTG in response to the migration request REQ_MIG (D. a migrate data of PG_MTG). The steps C and D are similar to operations c and d described above referring to FIG. 4, and then the further detail description is omitted for conciseness.

In an embodiment, the migration management circuit 120 may invalidate the snoop filter entry SFE that the corresponded raw data corresponds to each cache line on the migration target page PG_MTG.

On the other hand, if the number of the hot cache lines corresponding to the migration target page PG_MTG is greater than the migration threshold value TH_MIG, the migration management circuit 220 may not perform the steps C and D described above.

That is, according to an embodiment, only when the migration target page PG_MTG includes a plurality of raw data corresponding to the hot cache lines more than the migration threshold value TH_MIG, the migration management circuit 220 may issue the migration request REQ_MIG for the migration target page PG_MTG. In this case, since the plurality of raw data corresponding to the plurality of hot cache lines may be migrated through the single migration, a migration efficiency may be improved. Therefore, according to the embodiment of FIG. 11, the operational performance of the memory system MS may be improved.

In an embodiment, the operations A to D described above may be performed between the operations "circle 2" to "circle 5" described above referring to FIG. 3.

FIG. 12 is a flowchart showing how a migration is performed according to an embodiment. Referring to FIG. 1 to FIG. 12, in operation S2100, the shared memory device 100 may determine the victim snoop filter entry SFE_VCT. The operation S2100 is similar to the operation S1100 described above, therefore it will be not described in further detail for conciseness.

In operation S2200, the shared memory device 100 may determine whether the number of the hot cache lines CL corresponding to the migration target page PG_MTG is greater than the migration threshold value TH_MIG. For example, the migration management circuit 220 may determine a page PG that stores the raw data for the cache line corresponding to the victim snoop filter entry SFE_VCT as the migration target page PG_MTG. The migration management circuit 220 may determine the hotness of each cache line corresponding to the raw data stored in the migration target page PG_MTG.

If the number of the hot cache lines CL corresponding to the migration target page PG_MTG is greater than the migration threshold value TH_MIG (operation S2200, Y), operation S2300 following may be performed. If the number of hot cache lines CL corresponding to the migration target page PG_MTG is less than the migration threshold value TH_MIG (operation S2200, N), a following operation S2500 may be performed.

In operation S2300, the shared memory device 100 may provide the migration request REQ_MIG for the migration target page PG_MTG to the first processor 11. In operation S2400, the first processor 11 may respond to the migration request REQ_MIG to migrate the data of the migration target page PG_MTG from the shared memory device 100 to the first dedicated memory device DMD1. In operation S2500, the shared memory device 100 may evict the victim snoop filter entry SFE_VCT. The operations S2300 to S2500 are similar to the operations S1300 to S1400 described above, therefore they will not be described in further detail for conciseness.

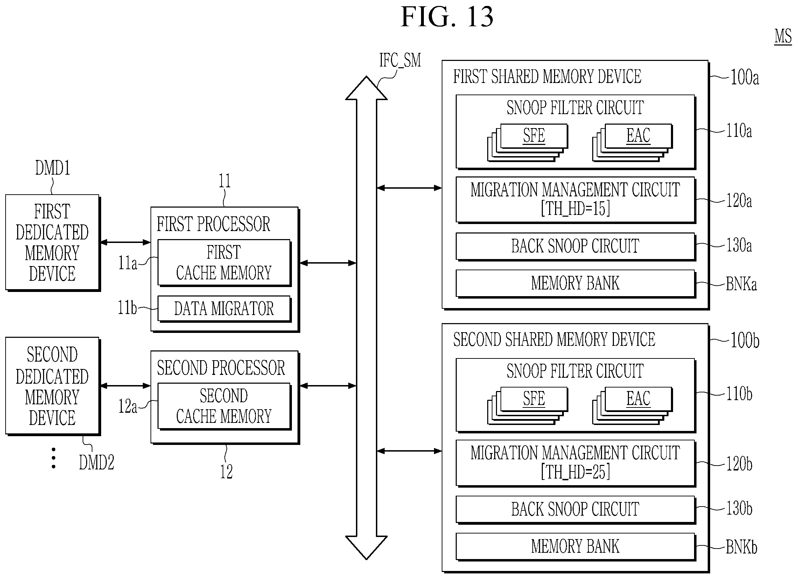

FIG. 13 is a block diagram showing a memory system according to an embodiment. Referring to FIG. 1 to FIG. 10, and FIG. 13, a memory system MS may include a first processor 11, a second processor 12, a first dedicated memory device DMD1, a second dedicated memory device DMD2, a first shared memory device 100a, and a second shared memory device 100b. The is, the memory system MS may include a plurality of shared memory devices 100.

The configuration and operation of the first processor 11, the second processor 12, the first dedicated memory device DMD1, and the second dedicated memory device DMD2 have been described above with reference to FIG. 10, therefore they will not be described in further detail for conciseness.

The first shared memory device 100a may include a snoop filter circuit 110a, a migration management circuit 120a, a back snoop circuit 130a, and a memory bank BNKa. The second shared memory device 100b may include a snoop filter circuit 110b, a migration management circuit 120b, a back snoop circuit 130b, and a memory bank BNKb. The detailed descriptions of the configuration and function of the snoop filter circuit 110, the migration management circuit 120, the back snoop circuit 130, and the memory bank BNK described above are omitted for conciseness.

The memory bank BNKa and the memory bank BNKb may store different data. The first shared memory device 100a and the second shared memory device 100b may independently manage a plurality of snoop filter entries SFE and a plurality of entry access counts EAC.

Each of the migration management circuit 120a and the migration management circuit 120b may determine the hotness of the cache line with independent criteria. For example, the migration management circuit 120a may determine the hotness of the cache line corresponding to each snoop filter entry SFE based on the hotness determination threshold value TH_HD '15', and the migration management circuit 120b may determine the hotness of the cache line corresponding to each snoop filter entry SFE based on the hotness determination threshold value TH_HD '25'.

Therefore, the frequency with which the first shared memory device 100a and the second shared memory device 100b issue migration request REQ_MIG may vary depending on the data access pattern of each of the plurality of processors as well as the hotness determination threshold value TH_HD of each of the migration management circuit 120a and the migration management circuit 120b.

If the migration request REQ_MIG is received from the specific shared memory device 100 at an excessively high frequency, the first processor 11 may request to increase the hotness determination threshold value TH_HD for corresponding specific shared memory device 100. For example, if the migration request REQ_MIG is received from the first shared memory device 100a at an excessively high frequency, the first processor 11 may request the first shared memory device 100a to increase the hotness determination threshold value TH_HD to a value higher than '15' .

On the other hand, if the migration request REQ_MIG is received from the specific shared memory device 100 at an excessively low frequency, the first processor 11 may request to reduce the hotness determination threshold value TH_HD for that specific shared memory device 100. For example, if the migration request REQ_MIG is received from the second shared memory device 100b at an excessively high frequency, the first processor 11 may request second shared memory device 100b to decrease the hotness determination threshold value TH_HD to a value lower than '25'.

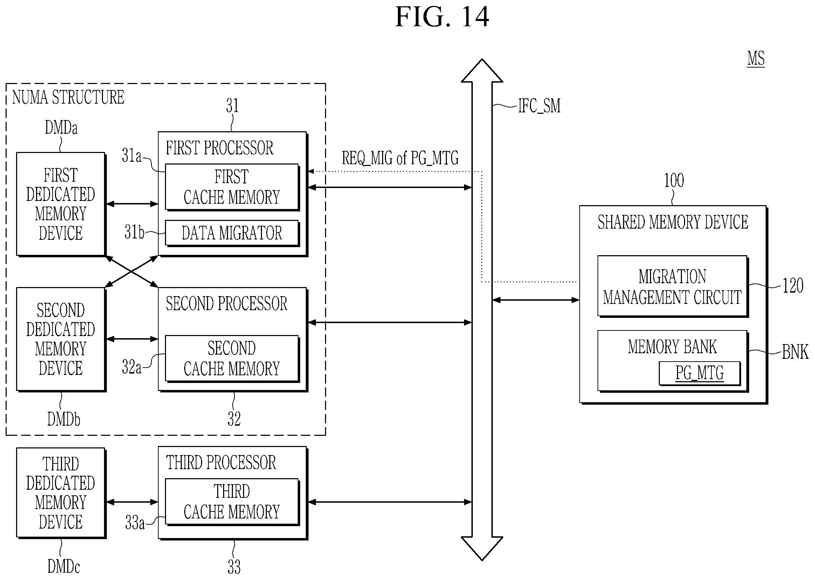

FIG. 14 is a block diagram showing a memory system according to an embodiment. Referring to FIG. 1 to FIG. 14, a memory system MS may include a first processor 31, a second processor 32, and a third processor 33, a first dedicated memory device DMDa, a second dedicated memory device DMDb, and a third dedicated memory device DMD DMDc, and a shared memory device 100.

The first to third processors 31 to 33 and the shared memory device 100 may be interconnected through the shared memory interface circuit IFC_SM. For example, the first to third processors 31 to 33 may share the shared memory device 100 based on the CXL interface executed on the shared memory interface circuit IFC_SM.

The first to third processors 31 to 33 may include first to third cache memories 31a to 33a respectively. The first to third cache memories 31a to 33a may each cache data used in the operation of the corresponding processor.

The first to third processors 31 to 33 may be directly connected to the first to third dedicated memory devices DMD1 to DMD3, respectively.

The first processor 31, the second processor 32, the first dedicated memory device DMDa, and the second dedicated memory device DMDb may form a non-uniform memory access (NUMA) structure.

The third processor 33, which is not included in the NUMA structure, may only access the directly connected third dedicated memory device DMDc and shared memory device 100, and may not access the first and second dedicated memory devices DMD1 to DMD2.

In contrast, processors included in the NUMA structure may share the dedicated memory devices included in the NUMA structure. For example, the first processor 31 may also access the second dedicated memory device DMDb, and the second processor 32 may also access the first dedicated memory device DMDa.

However, in an embodiment, the physical distance between the first processor 31 and the first dedicated memory device DMDa may be shorter than the physical distance between the first processor 31 and the second dedicated memory device DMDb. The first dedicated memory device DMDa may be referred to as a local memory device for the first processor 31, and the second dedicated memory device DMDb may be referred to as a remote memory device for the first processor 31. Due to the difference in the physical distance, the first processor 31 may access the local memory device for the first processor 31 with a faster speed than the remote memory device for the first processor 31.

Similarly, the physical distance between the second processor 32 and the second dedicated memory device DMDb may be shorter than the physical distance between the second processor 32 and the first dedicated memory device DMDa. The second dedicated memory device DMDb may be referred to as a local memory device for the second processor 32, and the first dedicated memory device DMDa may be referred to as a remote memory device for the second processor 32. Due to the difference in the physical distance, the second processor 32 may access the local memory device for the second processor 32 at a faster speed than the remote memory device to the second processor 32.

For concise explanation, FIG. 14 shows an embodiment in which the first processor 31 and the second processor 32 are connected to the shared memory interface circuit IFC_SM through separate physical interfaces, but embodiments are not limited thereto. For example, in some embodiment, the first processor 31 and the second processor 32 may be connected to the shared memory interface circuit IFC_SM through a single physical interface.

The shared memory device 100 may include a migration management circuit 120 and a memory bank BNK. The memory bank BNK may include a migration target page PG_MTG. Similar to what was described previously in FIG. 1, referring to FIG. 12, the migration management circuit 120 may issue the migration request REQ_MIG for the migration target page PG_MTG. For simplicity, hereinafter it is assumed that the migration management circuit 120 provides the migration request REQ_MIG to the first processor 31.

The first processor 31 may include a data migrator 31b. The data migrator 31b may migrate the migration target page PG_MTG in response to the migration request REQ_MIG.

The data migrator 31b may migrate the migration target page PG_MTG to the dedicated memory device which is accessible to the first processor 31. For example, the data migrator 31b may migrate the migration target page PG_MTG to the first dedicated memory device DMDa or the second dedicated memory device DMDb.

The data migrator 31b may determine a migration destination based on the physical distance (or a locality) for the first processor 31 of the first dedicated memory device DMDa and the second dedicated memory device DMDb. For example, the data migrator 31b may set the local memory device for the first processor 31 as a higher priority migration destination; and may set the remote memory device for first processor 31 as a lower priority migration destination. In this case, after the migration, the first processor 31 will be able to access the data of the migration target page PG_MTG more quickly.

The data migrator 31b may temporarily migrate the data of the migration target page PG_MTG to a buffer memory that is separate and allocated for the first processor 31. For example, if the data of the migration target page PG_MTG cannot be additionally stored in the first dedicated memory device DMDa and the second dedicated memory device DMDb, the data migrator 31b may temporarily migrate the data of the migration target page PG_MTG to the buffer memory allocated for the first processor 31. In this case, the data migrator 31b may migrate the data stored in the buffer memory when the data of the migration target page PG_MTG may be additionally stored in the first dedicated memory device DMDa or the second dedicated memory device DMDb. However, embodiments are not limited thereto.

In an embodiment, the buffer memory may be a component included in one of components within the NUMA structure for the operation of the data migrator 31b, or may be a component included in a separate memory device not shown in FIG. 14. However, embodiments are not limited to the specific implementation of the buffer memory.

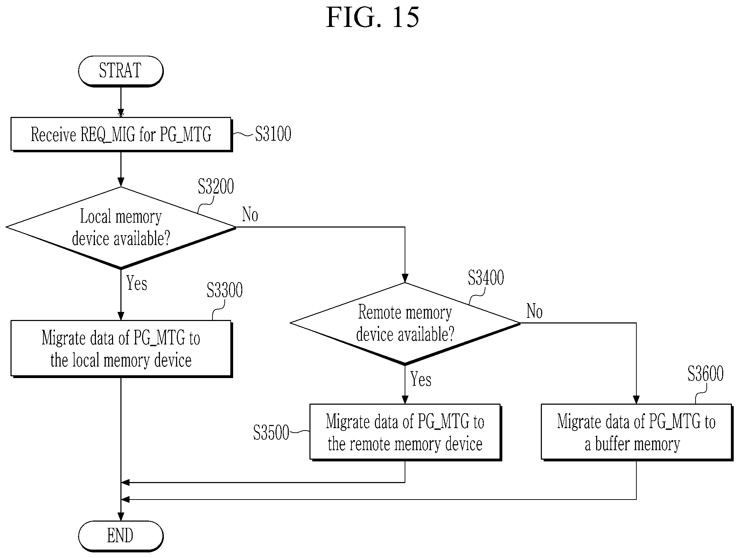

FIG. 15 is a flowchart showing an operation of a first processor of FIG. 14, according to an embodiment. Referring to FIG. 1 to FIG. 15, in operation S3100, the first processor 31 may receive the migration request REQ_MIG for the migration target page PG_MTG. For example, the first processor 31 may receive the migration request REQ_MIG from the shared memory device 100.

In operation S3200, the first processor 31 may determine whether the local memory device is available. For example, the data migrator 31b may determine whether a new data may be stored in the local memory device for the first processor 31 (i.e., the first dedicated memory device DMDa). If the local memory device is determined to be available (operation S3200, Yes), a following operation S3300 may be performed, and if the local memory device is determined to be unavailable (operation S3200, No), a following operation S3400 may be performed.

In operation S3300, the first processor 31 may migrate the data of the migration target page PG_MTG to the local memory device. For example, the first processor 31 may migrate the data of the migration target page PG_MTG to the local memory device (i.e., the first dedicated memory device DMDa) for the first processor 31.

In operation S3400, the first processor 31 may determine whether the remote memory device is available. For example, the data migrator 31b may determine whether a new data may be stored in the remote memory device (i.e., the second dedicated memory device DMDb) for the first processor 31.

If the remote memory device is determined to be available (S3400, Yes), a following operation S3500 may be performed. If the remote memory device is determined to be unavailable (S3400, No), a following operation S3600 may be performed.

In operation S3500, the first processor 31 may migrate the data of the migration target page PG_MTG to the remote memory device. For example, the first processor 31 may migrate the data of the migration target page PG_MTG to the remote memory device (i.e., the second dedicated memory device DMDb) for the first processor 31.

In operation S3600, the first processor 31 may migrate the data of the migration target page PG_MTG to the buffer memory.

In an embodiment, after the operation S3600 is performed, if the local memory device or the remote memory device for the first processor 31 becomes available, the data migrator 31b may migrate the data stored in the buffer memory to the available memory device. However, embodiments are not limited thereto.

## Claims

1. A shared memory device (100) comprising:
a memory bank (BNK) configured to store raw data corresponding to a cache line (CL) stored in a processor (11) among a plurality of processors (11, 12);
a snoop filter circuit (110) including a snoop filter entry (SFE) corresponding to the cache line (CL) and an entry access count (EAC) corresponding to the snoop filter entry (SFE); and
a migration management circuit (120) configured to determine a hotness of the cache line (CL) based on the entry access count (EAC) and to issue a migration request (REQ_MIG) for the raw data to the processor (11) based on the hotness.

2. The shared memory device (100) of claim 1, wherein the migration management circuit (120) is configured to determine the cache line (CL) as a hot cache line when the entry access count (EAC) is greater than a hotness threshold value (TH_HD).

3. The shared memory device (100) of claim 1 or 2, wherein the entry access count (EAC) is increased in response to an access for the snoop filter entry (SFE) from the plurality of processors (11, 12).

4. The shared memory device (100) of claim 3, further comprising:
a back snoop circuit (130) configured to update the entry access count (EAC) by repeatedly performing a back snoop operation for the snoop filter entry (SFE).

5. The shared memory device (100) of claim 4, wherein the back snoop circuit (130) is configured to:
provide an invalidation request (REQ_INV) for the cache line (CL) to the processor (11) at a first time point (tCache) within a first time period when the back snoop operation is performed; and
increase the entry access count (EAC) when the access for the snoop filter entry (SFE) occurs between the first time point (tCache) and a second time point (tEvict) at which a back snoop test time (tBSNT) has elapsed from the first time point (tCache).

6. The shared memory device (100) of claim 5, wherein the back snoop circuit (130) is configured to invalidate the snoop filter entry (SFE) based on the access for the snoop filter entry (SFE) not occurring between the first time point (tCache) and the second time point (tEvict).

7. The shared memory device (100) of any one of claims 1 to 6, wherein the migration management circuit (120) is configured to issue the migration request (REQ_MIG), based on an entry eviction decision notification for the snoop filter entry (SFE) from the snoop filter circuit (110).

8. The shared memory device (100) of any one of claims 1 to 7, wherein the processor (11) is configured to migrate the raw data to a dedicated memory device (DMD1) for the processor (11) based on the migration request (REQ_MIG).

9. The shared memory device (100) of claim 8, wherein:
the memory bank (BNK) includes a physical page (PG) including the raw data, and
the processor (11) is configured to migrate the physical page (PG) to the dedicated memory device (DMD1) based on the migration request (REQ_MIG).

10. The shared memory device (100) of claim 9, wherein:
the processor (11) includes one or more cache lines (CLs) in addition to the cache line (CL),
the physical page (PG) is configured to store one or more raw data respectively corresponding to the one or more cache lines (CLs), and
the migration management circuit (120) is configured to:
determine a hotness of each of the one or more cache lines (CLs),
determine a number of cache lines (CLs) that are hot cache lines (CLs) among the cache line (CL) and the one or more cache lines (CLs), based on the hotness of the cache line (CL) and the hotness of each of the one or more cache lines (CLs), and
issue the migration request (REQ_MIG) when the number of cache lines (CLs) is greater than a migration threshold value (TH_MIG).

11. A memory system (MS) comprising:
a processor (11) including a cache memory that stores a plurality of cache lines (CLs);
a dedicated memory device (DMD1) for the processor (11); and
a shared memory device (100) configured to store a raw data for a cache line (CL) of the plurality of cache lines (CLs), and to determine whether the cache line (CL) is a hot cache line,
wherein the processor (11) is configured to migrate the raw data from the shared memory device (100) to the dedicated memory device (DMD1) when the cache line (CL) is determined to be the hot cache line.

12. The memory system (MS) of claim 11, wherein the shared memory device (100) includes:
a snoop filter circuit (110) configured to store a plurality of snoop filter entries respectively corresponding to the plurality of cache lines (CLs) and a plurality of entry access counts (EAC1-EAC4) respectively corresponding to the plurality of snoop filter entries, and to increase each of the plurality of entry access counts (EAC1-EAC4) based on an entry access occurrence for a corresponding snoop filter entry; and
a migration management circuit (120) configured to determine whether the cache line (CL) is the hot cache line by comparing an entry access count (EAC) that corresponds to the cache line (CL), with a hotness threshold value (TH_HD).

13. The memory system (MS) of claim 12, wherein the shared memory device (100) further includes:
a back snoop circuit (130) configured to update the entry access count (EAC) by repeatedly performing a back snoop operation for a snoop filter entry (SFE) that corresponds to the cache line (CL) .

14. The memory system (MS) of claim 13, wherein the back snoop circuit (130) is configured to:
provide an invalidation request (REQ_INV) for the cache line (CL) to the processor (11) at a first time point (tCache) within a first time period when the back snoop operation is performed; and
increase the entry access count (EAC) when an access for the snoop filter entry (SFE) occurs between the first time point (tCache) and a second time point (tEvict) at which a back snoop time (tBSNT) has elapsed from the first time point (tCache).

15. The memory system (MS) of claim 14, wherein the back snoop circuit (130) is configured to:
invalidate the snoop filter entry (SFE) based on the access for the snoop filter entry (SFE) not occurring between the first time point (tCache) and the second time point (tEvict).
